# FASCICULE DE BREVET EUROPEEN

(11) **EP 1 420 982 B1**
(45) Date de publication et mention de la délivrance du brevet: **30.05.2007**
(21) Numéro de dépôt: 02774876.3
(22) Date de dépôt: 19.08.2002
(51) Int. Cl.: B60R 13/02

(54) **HABILLAGE POUR UNE COLONNE DE DIRECTION REGLABLE**
VERKLEIDUNG EINER VERSTELLBAREN LENKSÄULE
ELEMENT FOR AN ADJUSTABLE STEERING COLUMN

(30) Priorité: 22.08.2001 FR 0111008
(43) Date de publication de la demande: 26.05.2004
(73) Titulaire: Faurecia Interieur Industrie, 92000 Nanterre (FR)
(72) Inventeur: ERCOLANO, Tony, F-60130 Wavignies (FR); LESERRE, Dominique, F-77450 Monthy (FR)
(74) Mandataire: Prieur, Patrick
(86) Numéro de dépôt international: PCT/FR2002/002901
(87) Numéro de publication internationale: WO 2003/018366

(56) Documents cités:
- EP-A- 0 753 447
- EP-A- 0 838 387
- DE-U- 20 017 192

## Description

L'invention a pour objet un dispositif destiné à masquer les jeux entre une planche de bord et un élément d'habillage lié à une colonne de direction réglable.

L'invention concerne en particulier les colonnes de direction mobiles suivant deux directions et plus précisément les colonnes de direction réglables en translation suivant une direction longitudinale et angulairement en rotation suivant une direction latérale sensiblement perpendiculaire à la direction longitudinale. Ladite rotation angulaire de la colonne de direction induit un mouvement sensiblement de translation de l'élément d'habillage par rapport à la planche de bord suivant une direction angulaire transversale sensiblement perpendiculaire à la direction longitudinale et à la direction latérale.

EP-A-0 838 387 décrit un dispositif de ce type comprenant un élément intermédiaire relativement rigide présentant une surface de masquage venant sensiblement au contact de la planche de bord et une surface de glissement venant sensiblement au contact de l'élément d'habillage. Ledit élément intermédiaire coulisse sensiblement axialement par rapport à la planche de bord, tandis que l'élément d'habillage se déplace suivant la direction angulaire transversale par rapport à l'élément intermédiaire.

Cette réalisation possède certes des avantages par rapport à l'art antérieur. Toutefois, elle n'est pas complètement satisfaisante. En particulier, elle présente un encombrement conséquent à l'intérieur de l'architecture générale de la planche de bord et engendre des contraintes importantes pour l'intégrer harmonieusement aux formes de la planche de bord.

Pour résoudre ces différents problèmes, l'invention propose que :
- la surface de masquage s'étende sensiblement suivant la direction longitudinale, et la surface de glissement s'étende sensiblement suivant la direction transversale,
- le dispositif comprenne en outre des premiers moyens pour déplacer l'élément d'habillage sensiblement suivant la direction longitudinale par rapport à la planche de bord et maintenir l'élément intermédiaire suivant la direction longitudinale par rapport à la planche de bord, lors du coulissement suivant la direction longitudinale de la colonne de direction par rapport à la planche de bord, de sorte que la surface de glissement reste sensiblement au contact de la planche de bord et que l'élément d'habillage coulisse par rapport à la surface de masquage, en restant sensiblement au contact de ladite surface de masquage, et
- le dispositif comprenne en outre des seconds moyens pour déplacer l'élément intermédiaire sensiblement suivant la direction transversale par rapport à la planche de bord et maintenir l'élément intermédiaire suivant la direction transversale par rapport à l'élément d'habillage, lors de la rotation angulaire de la colonne de dilection, de sorte que la surface de masquage soit alors sensiblement immobile par rapport à l'élément d'habillage et que la surface de glissement se déplace sensiblement suivant la direction transversale par rapport à la planche de bord, en restant sensiblement au contact de ladite planche de bord.

Ainsi, le dispositif est plus simple, moins onéreux et d'un encombrement inférieur.

Avantageusement, le dispositif comprend en outre des moyens de guidage en translation sensiblement suivant la direction longitudinale reliant directement l'élément intermédiaire à l'élément d'habillage.

En guidant directement l'élément intermédiaire par rapport à l'élément d'habillage, le positionnement relatif de ces deux éléments sera mieux contrôlé. L'accostage entre eux sera donc plus précis, autrement dit plus satisfaisant esthétiquement.

Selon une autre caractéristique avantageuse, l'invention propose que les moyens de guidage en translation comprennent :
- deux rainures s'étendant sensiblement suivant la direction longitudinale comprenant,
- des nervures s'insérant à l'intérieur desdites rainures, et
- des premiers bossages s'étendant suivant la direction transversale et des seconds bossages s'étendant suivant la direction latérale, chacun desdits premiers et chacun desdits seconds bossages s'étendant entre les nervures et les rainures afin d'engendrer un contact ponctuel entre les nervures et les rainures.

Le guidage est ainsi simple, peu coûteux et fiable. Les contacts ponctuels fiabilisent le coulissement, en évitant un phénomène de coincement, lequels risquerait de se produire dans le cas de contacts surfaciques entre pièces en matière plastique notamment.

L'invention va apparaître encore plus clairement dans la description qui va suivre, faite en référence aux dessins annexés dans lesquels :
- la figure 1 est une vue en perspective dessus gauche d'un dispositif conforme à l'invention, au sein d'une planche de bord,

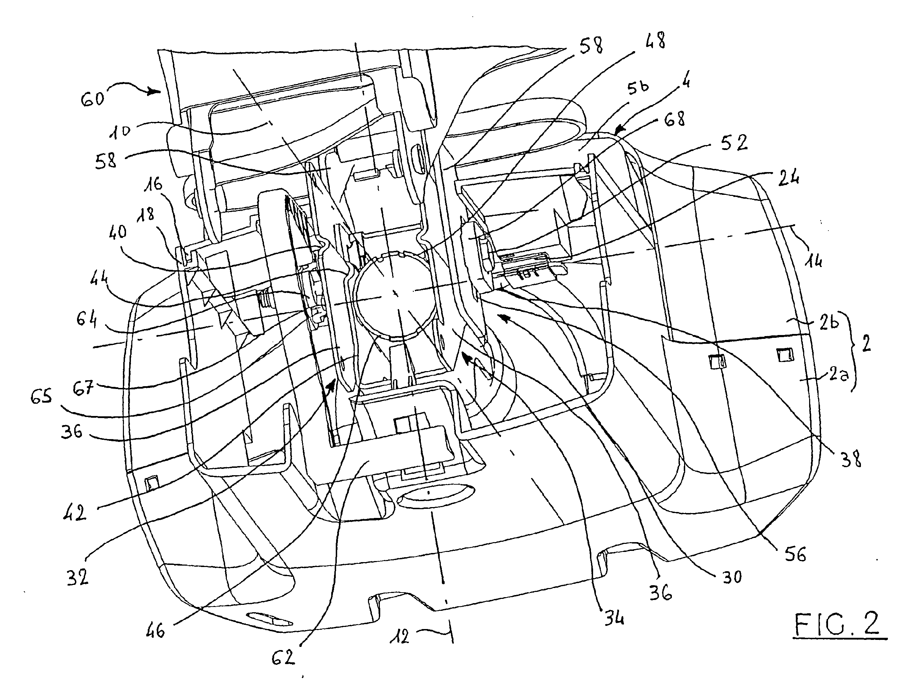

- la figure 2 est une vue arrière en perspective dessous droite du dispositif,

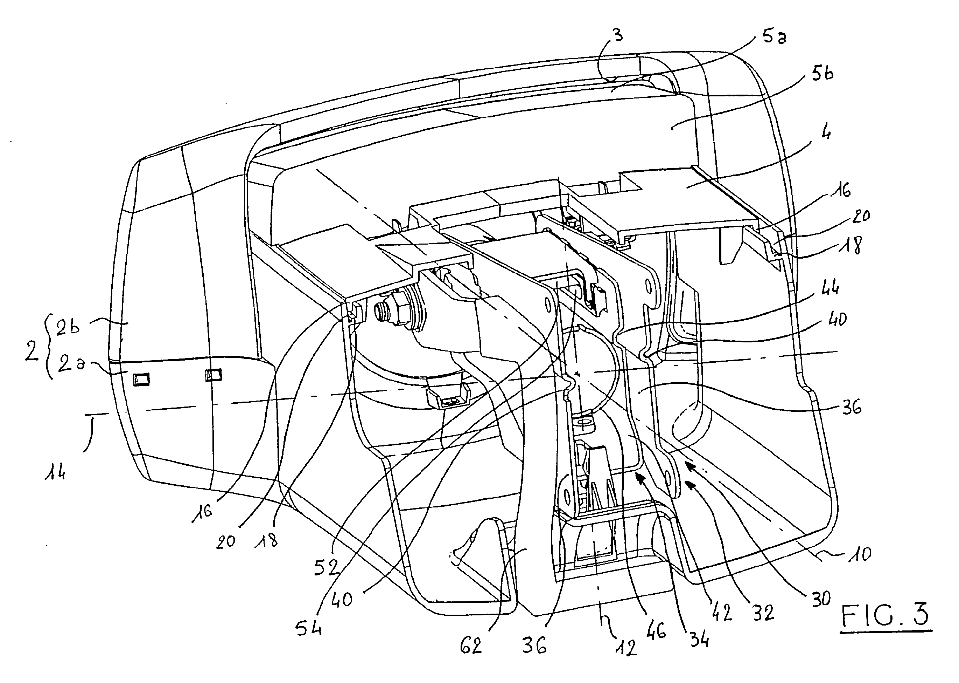

- la figure 3 est une vue arrière en perspective dessus gauche du dispositif, sans le support fixé à la planche de bord,

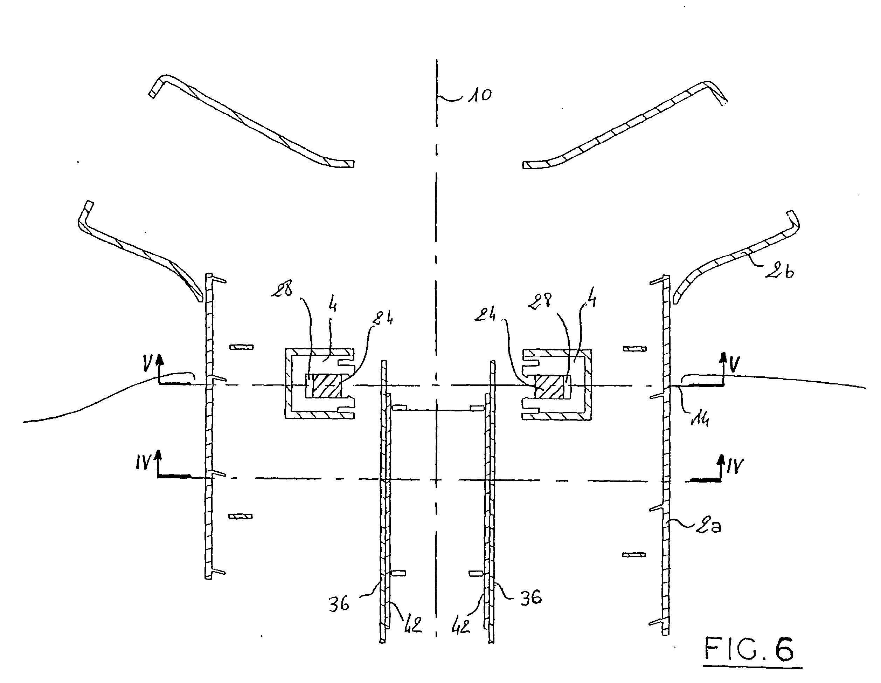

- la figure 4 est une section selon le plan repéré IV-IV à la figure 6,
- la figure 5 est une section selon le plan repéré V-V à la figure 6,
- la figure 6 est une section selon le plan repéré VI-VI à la figure 5,
- la figure 7 est une section selon le plan repéré VII-VII à la figure 4,
- la figure 8 est une section selon le plan repéré VIII-VIII à la figure 5.

Les figures illustrent un dispositif 1 comprenant notamment un élément d'habillage 2 et un élément intermédiaire formant cache 4 disposé entre l'élément d'habillage et une planche de bord 6.

L'élément d'habillage 2 est constitué d'une demi-coquille inférieure 2a et une demi-coquille supérieure 2b fixées ensemble, ici par clippage. Cet élément d'habillage est destiné à renfermer des boîtiers de commande (non représentés) de moyens de signalisation tels que les clignotants, l'éclairage extérieur et l'essuie-glace,... Il présente un passage central traversé par un arbre 8 de colonne de direction destiné à porter un volant et s'étendant suivant une direction longitudinale 10, ici sensiblement horizontale.

La coquille supérieure 2b présente une surface de fermeture 3 venant sensiblement au contact d'une surface de masquage 5a du cache 4. Ladite surface de masquage 5a s'étend sensiblement suivant la direction longitudinale 10 et vient obturer le jeu existant entre l'élément d'habillage 2, plus précisément la surface de fermeture 3, et la planche de bord 6. Le cache 4 comprend en outre une surface de glissement 5b s'étendant sensiblement au contact de la planche de bord 6 suivant une direction angulaire transversale 12, perpendiculaire à la direction longitudinale 10 et ici sensiblement verticale.

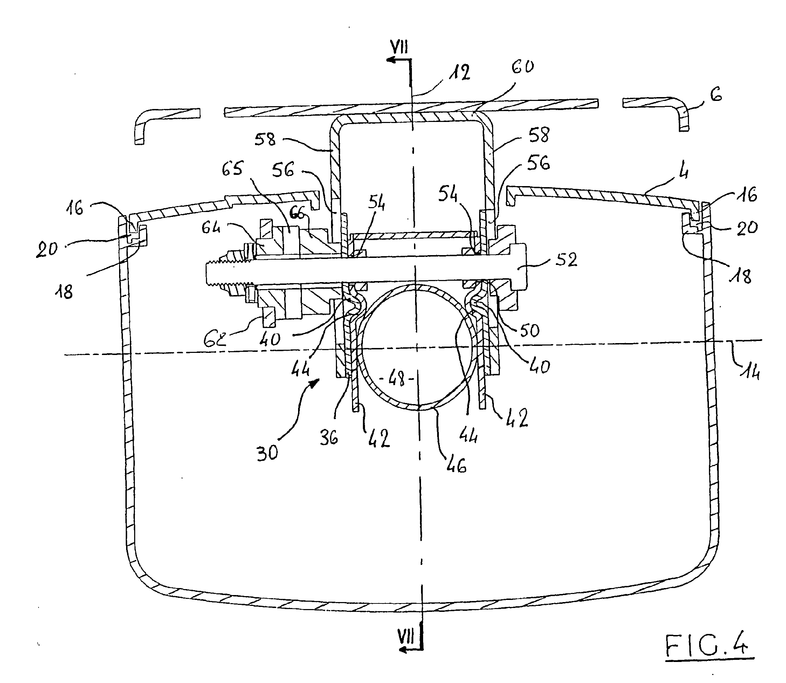

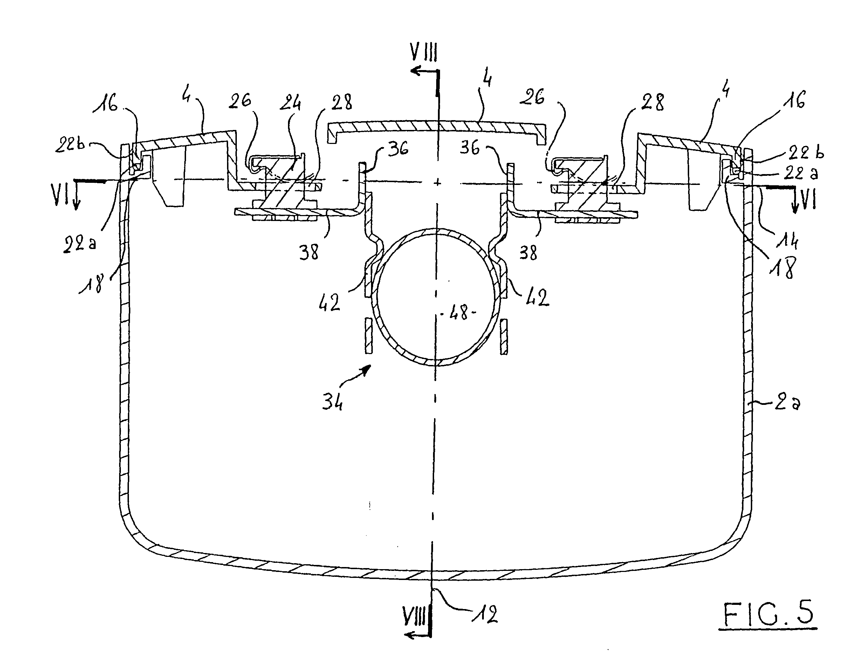

Tel qu'illustré en particulier aux figures 4 et 5, le cache 4 repose sur la coquille inférieure 2a. Il comprend en partie inférieure deux nervures longitudinales 16 faisant saillie en direction de la demi-coquille inférieure 2a suivant la direction transversale 12.

La demi-coquille inférieure 2a présente à son extrémité supérieure deux goulottes 18 définissant chacune une rainure 20 recevant les nervures 16 du cache 4. Un bossage principal 22a et un bossage latéral 22b viennent en saillie par rapport à chacune des nervures 16 à chacune de leurs extrémités suivant la direction longitudinale et éventuellement de place en place entre ces dites extrémités.

Le cache 4 comprend par conséquent au moins quatre bossages principaux 22a s'étendant suivant la direction transversale 12 et quatre bossages latéraux 22b s'étendant suivant une direction latérale 14 qui est horizontale et perpendiculaire tant à la direction longitudinale 10 qu'à la direction transversale 12. Ces bossages 22a, 22b, sensiblement en forme de calotte sphérique génèrent chacun un contact sensiblement ponctuel avec la goulotte 18.

La demi-coquille inférieure 2a et le cache 4 sont liés à un ensemble mécanique structurel 30 comprenant un chariot 32, un coulisseau 34 coulissant à l'intérieur du chariot 32 suivant la direction longitudinale 10, une tige de réglage 52 et une poignée de commande 62.

Le chariot 32 comprend principalement deux plaques latérales 36 s'étendant perpendiculairement à la direction transversale 14 et deux ailes 38 s'étendant suivant la direction latérale 14, solidaires des plaques latérales 36. Chacune des plaques latérales 36 intègre une nervure de guidage 40 allongée s'étendant suivant la direction longitudinale 10.

Le coulisseau 34 comprend principalement deux plaques latérales 42 d'épaisseur sensiblement constante, parallèles entre elles et maintenues à distance l'une de l'autre. Elles viennent au contact des plaques latérales 36 du chariot et intègrent chacune une nervure 44 s'étendant suivant la direction longitudinale 10 sensiblement similaire aux nervures de guidage 40, de sorte que lesdites nervures de guidage 40 du chariot 32 s'insèrent dans les nervures 44 du coulisseau 34 afin de le guider en translation suivant la direction longitudinale 10.

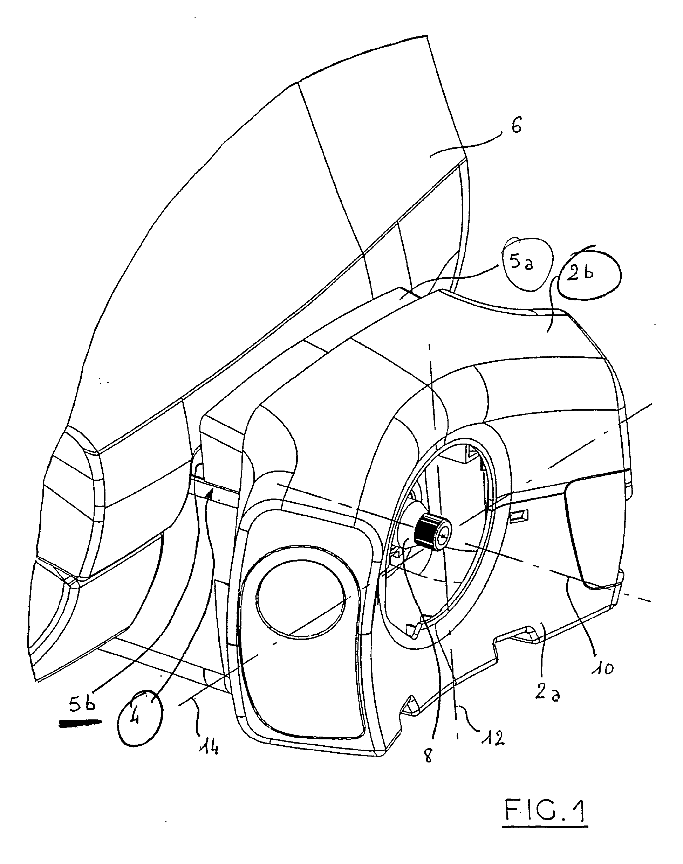

Le coulisseau 34 intègre en outre un manchon tubulaire 46, solidaire des plaques latérales 42, définissant un passage 48 de section circulaire traversant de part en part le coulisseau suivant la direction longitudinale 10 et destinée à recevoir l'arbre de colonne de direction 8 (représenté uniquement sur la figure 1).

Le chariot 32 présente deux trous circulaires 50 ménagés dans chacune des plaques latérales 36 et recevant étroitement la tige de réglage 52, de sorte que le chariot 32 définit une chape maintenue par la tige de réglage 52. La tige de réglage 52 passe à travers deux trous oblongs ou fentes 54 s'étendant suivant la direction longitudinale 10 et ménagés dans chacune des plaques latérales 42 du coulisseau 34 pour permettre au coulisseau de translater suivant la direction longitudinale 10.

La tige de réglage 52 passe également à travers deux trous oblongs ou fentes 56 ménagés dans deux pattes de fixation 58 d'un support 60 destiné à être fixé à la planche de bord 6 ou à la structure d'un véhicule. Le support 60 est par conséquent fixe par rapport à la planche de bord. Les trous oblongs 56 s'étendent suivant la direction transversale 12 afin de permettre à l'ensemble mécanique 30 de coulisser suivant ladite direction transversale 12.

Une première bague 64 munie de créneaux 65 pivotant autour de la tige de réglage 52 est fixée à la poignée de commande 62 et coopère avec une deuxième bague 66 munie de créneaux 67, elle aussi traversée par la tige de commande 52, mais arrêtée en rotation suivant la direction latérale 14 par le trou oblong 56 dans lequel elle est insérée. En fonction de la position qu'il donne à la poignée de commande 62, le conducteur libère ou fixe l'ensemble mécanique 30 par rapport au support 60 en pressant un patin 68 contre la patte de fixation 58.

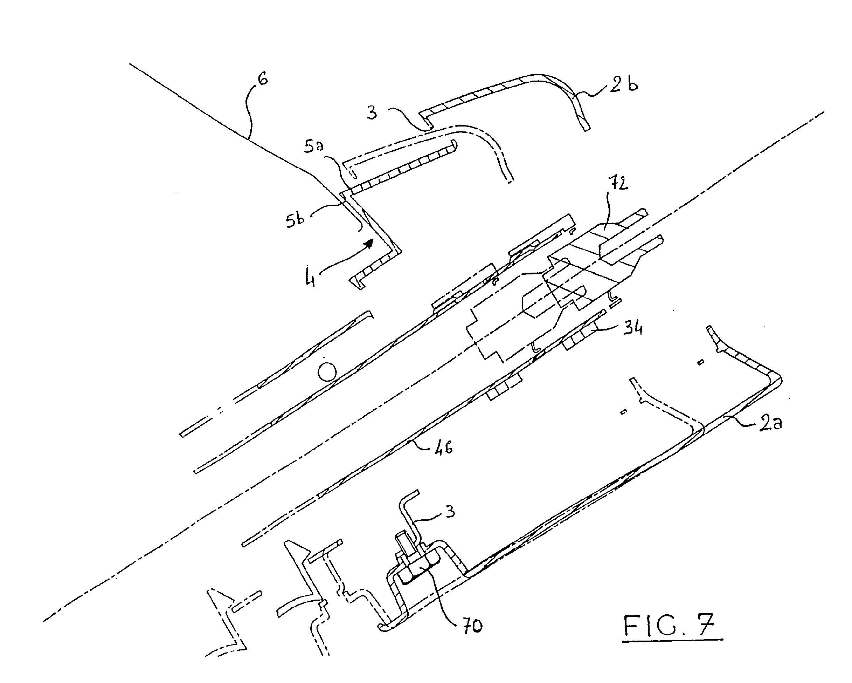

Tel qu'illustré à la figure 7, la demi-coquille inférieure 2a est fixée au coulisseau par l'intermédiaire d'une vis 70.

Tel qu'illustré à la figure 5, le cache 4 est lié aux ailes 38 par l'intermédiaire d'agrafes 24 fixées aux ailes 38, ici par clippage, et passant à travers des trous oblongs 28 ménagés dans le cache 4. En fait, compte tenu du jeu ménagé entre les agrafes 24 et les trous 28, le cache est libre de coulisser suivant la direction transversale 12 et la direction latérale 14. En revanche, les agrafes 24 sont étroitement reçues dans les trous 28 selon la direction longitudinale 10, de sorte que la position du cache 4 suivant ladite direction longitudinale 10 est déterminée par celle du chariot 32 suivant cette direction, les mouvements de translation du chariot 32 et du cache 4 suivant cette direction étant combinés.

Une patte élastique 26 maintenue par l'agrafe 24 exerce une pression suivant la direction transversale 12 sur le cache 4, en direction de la demi-coquille inférieure 2a, pour le maintenir et en particulier ses bossages principaux 22a au contact de la rainure 20, y compris s'il existe un léger défaut d'alignement entre la direction d'allongement de la nervure de guidage 40 et la direction d'allongement de la nervure 20.

Lorsque le conducteur désire régler la position du volant par rapport à la planche de bord 6 suivant la direction longitudinale 10, après avoir actionné la poignée de commande 62, il pousse ou il tire sur le volant suivant ladite direction longitudinale. Il provoque alors un déplacement de l'arbre 8 de colonne de direction auquel est fixé le volant et par conséquent d'une pièce d'accouplement 72, transmettant le mouvement de translation suivant la direction longitudinale au coulisseau 34. La figure 7 représente en trait continu le dispositif volant en position avancée dans l'habitacle et en trait mixte en position reculée.

Du fait de la liaison existant entre le chariot 32 et le support 60 par l'intermédiaire de la tige de réglage 52, le chariot 32 ne peut se déplacer suivant la direction longitudinale 10 par rapport à la planche de bord 6, de sorte que le coulisseau 34 coulisse à l'intérieur du chariot 32 suivant la direction longitudinale 10.

Le cache 4, en particulier sa surface de masquage 5a et sa surface de glissement 5b, restent alors immobiles par rapport à la planche de bord 6, tandis que l'élément d'habillage 2, en particulier sa surface de fermeture 3, translate suivant la direction longitudinale 10 par rapport à la planche de bord 6, suivant ainsi le même mouvement que le volant. Tel qu'illustré à la figure 7, la surface de fermeture 3 de l'élément d'habillage 2 coulisse ainsi suivant la direction longitudinale 10 par rapport à la surface de masquage 5a du cache 4, tout en restant sensiblement à son contact. En pratique, un jeu compris de préférence entre 1 et 5 millimètres sera ménagé entre la surface de fermeture 3 et la surface de masquage 5a.

Lorsque le conducteur désire régler la position du volant par rapport à la planche de bord 6 suivant la direction transversale 12, il fait pivoter le volant autour de la direction latérale 14. Le centre de rotation étant à l'extrémité de la colonne de direction qui est à l'opposé du volant, il se trouve à une distance du dispositif 1 (entre 40 et 80 centimètres) très largement supérieure au déplacement du dispositif suivant la direction transversale 12 (entre 2 et 8 centimètres). Le pivotement du volant engendre par conséquent sensiblement un mouvement de translation du coulisseau 34 suivant la direction angulaire 12 par rapport à la planche de bord 6. Le chariot 32 ne pouvant se déplacer par rapport au coulisseau 34 suivant la direction transversale 12 du fait des nervures 40, 44, suit le mouvement imposé par le coulisseau 34.

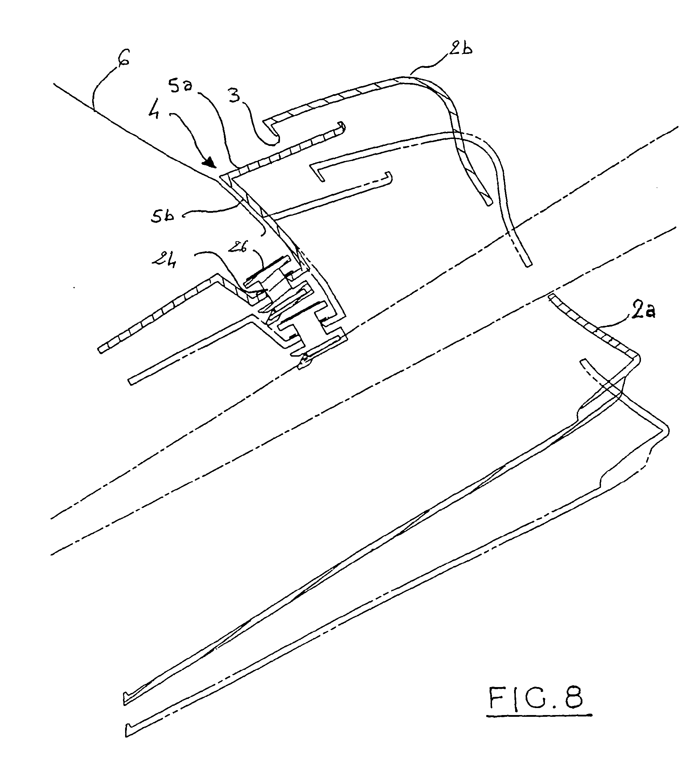

Par conséquent, tel qu'illustré à la figure 8 représentant en trait continu le dispositif, volant en position haute et en trait mixte, volant en position basse, l'élément d'habillage 2 et le cache 4 suivent le mouvement du volant, de sorte qu'il n'y a pas de mouvement relatif entre l'élément d'habillage 2 et le cache 4. En revanche, la surface de glissement 5b se déplace par rapport à la planche de bord 6 suivant la direction angulaire 12. La surface de glissement 5b s'étendant suivant la direction angulaire 12, elle reste sensiblement au contact de la planche de bord 6 au cours de ce déplacement suivant la direction transversale 12.

L'opération de réglage du volant a été présentée successivement suivant la direction longitudinale 10, puis suivant la direction transversale 12 par simplification. Rien n'empêche d'effectuer simultanément les deux réglages.

L'élément d'habillage 2 et le cache 4 seront réalisés de préférence dans un matériau plastique relativement rigide, tel qu'un polyoléfine. L'ensemble structurel 30 ayant en outre à résister à des sollicitations mécaniques, les pièces le composant seront avantageusement réalisées dans un matériau plus robuste, en particulier à base de métal.

## Revendications

1. Dispositif (1) destiné à masquer les jeux entre une planche de bord (6) et un élément d'habillage (2) lié à une colonne de direction (8) réglable en translation suivant une direction longitudinale (10) et angulairement en rotation suivant une direction latérale (14) sensiblement perpendiculaire à la direction longitudinale, ladite rotation angulaire de la colonne de direction induisant un mouvement sensiblement de translation de l'élément d'habillage par rapport à la planche de bord suivant une direction transversale (12) sensiblement perpendiculaire à ladite direction longitudinale (10) et à la direction latérale (14), ledit dispositif comprenant en outre un élément intermédiaire (4) relativement rigide présentant une surface de glissement (5b) venant sensiblement au contact de la planche de bord et une surface de masquage (5a) venant sensiblement au contact de l'élément d'habillage, **caractérisé en ce que** :
- la surface de masquage s'étend sensiblement suivant la direction longitudinale et la surface de glissement s'étend sensiblement suivant la direction transversale,
- le dispositif comprend en outre des premiers moyens (24, 34,38, 54) pour déplacer l'élément d'habillage sensiblement suivant la direction longitudinale par rapport à la planche de bord et maintenir l'élément intermédiaire suivant la direction longitudinale par rapport à la planche de bord, lors du coulissement suivant la direction longitudinale de la colonne de direction par rapport à la planche de bord, de sorte que la surface de glissement reste sensiblement au contact de la planche de bord et que l'élément d'habillage coulisse par rapport à la surface de masquage, en restant sensiblement au contact de ladite surface de masquage, et
- le dispositif comprend en outre des seconds moyens (32, 40, 44, 56) pour déplacer l'élément intermédiaire sensiblement suivant la direction transversale par rapport à la planche de bord et maintenir l'élément intermédiaire suivant la direction transversale par rapport à l'élément d'habillage, lors de la rotation angulaire de la colonne de direction, de sorte que la surface de masquage soit alors sensiblement immobile par rapport à l'élément d'habillage et que la surface de glissement se déplace sensiblement suivant la direction transversale par rapport à la planche de bord, en restant sensiblement au contact de ladite planche de bord.

2. Dispositif selon la revendication 1, **caractérisé en ce qu'**il comprend en outre des moyens de guidage (16,18, 20, 22a, 22b) en translation sensiblement suivant la direction longitudinale reliant directement l'élément intermédiaire à l'élément d'habillage.

3. Dispositif selon la revendication 2, **caractérisé en ce que** les moyens de guidage en translation comprennent :
- deux rainures (20) s'étendant sensiblement suivant la direction longitudinale (10),
- des nervures (16) s'insérant à l'intérieur desdites rainures, et
- des premiers bossages (22a) s'étendant suivant la direction transversale et des seconds bossages (22b) s'étendant suivant la direction latérale (14), chacun desdits premiers et chacun desdits seconds bossages s'étendant entre les nervures et les rainures afin d'engendrer un contact ponctuel entre les nervures et les rainures.

4. Dispositif selon l'une quelconque des revendications précédentes, **caractérisé en ce que** :
- les seconds moyens comprennent un chariot (32) coulissant suivant ladite direction transversale par rapport à la planche de bord,
- les premiers moyens comprennent:
• un coulisseau (34) auquel est fixé l'élément d'habillage (2), coulissant par rapport au chariot suivant la direction longitudinale, et
• des moyens (24, 38) pour lier, en translation suivant la direction longitudinale, le chariot à l'élément intermédiaire, de manière que ces derniers se déplacent suivant des mouvements de translations combinées suivant la direction longitudinale.

5. Dispositif selon la revendication 4, **caractérisé en ce que** l'élément intermédiaire (4) est libre par rapport au chariot (32) suivant la direction transversale (12).

6. Dispositif selon la revendication 5, **caractérisé en ce qu'**il comprend en outre des moyens élastiques (26) agissant sensiblement suivant la direction transversale (12) pour maintenir l'élément intermédiaire (4) au contact de l'élément d'habillage (2).

7. Dispositif selon l'une quelconque des revendications 4 à 6, **caractérisé en ce que** l'élément intermédiaire (4) est libre par rapport au chariot (32) suivant la direction latérale (14).

8. Dispositif selon l'une quelconque des revendications 4 à 7, **caractérisé en ce que** :
- les second moyens comprennent en outre une première fente (56) s'étendant suivant la direction transversale (12), ménagée dans un support (60) fixé à la planche de bord (6),
- les premiers moyens comprennent en outre une deuxième fente (54) s'étendant suivant la direction longitudinale (10), ménagée dans le coulisseau (34),
- le chariot (32) définit une chape présentant deux trous (50) supportant une tige (52) passant à travers la première et la deuxième fentes.

9. Dispositif selon l'une quelconque des revendications 4 à 8, **caractérisé en ce que** le coulisseau (32) est traversé de part en part suivant la direction longitudinale (10) par un passage (48) de section circulaire destiné à recevoir un arbre de direction (8).

## Claims

1. Device (1) for masking the gap between an instrument panel (6) and a covering element (2) connected to a steering column (8) that is adjustable in translation according to a longitudinal direction (10) and angularly in rotation according to a lateral direction (14) substantially perpendicular to the longitudinal direction, said angular rotation of the steering column inducing a substantially translational movement of the covering element relative to the instrument panel according to a transverse direction (12) substantially perpendicular to said longitudinal direction (10) and to the lateral direction (14), said device further comprising a relatively rigid intermediate element (4) having a sliding surface (5b) that comes substantially into contact with the instrument panel and a masking surface (5a) that comes substantially into contact with the covering element,
**characterised in that**:
- the masking surface extends substantially according to the longitudinal direction and the sliding surface extends substantially according to the transverse direction,
- the device further comprises first means (24, 34, 38, 54) for displacing the covering element substantially according to the longitudinal direction relative to the instrument panel and maintaining the intermediate element according to the longitudinal direction relative to the instrument panel during sliding of the steering column according to the longitudinal direction relative to the instrument panel, so that the sliding surface remains substantially in contact with the instrument panel and the covering element slides relative to the masking surface while remaining substantially in contact with said masking surface, and
- the device further comprises second means (32, 40, 44, 56) for displacing the intermediate element substantially according to the transverse direction relative to the instrument panel and maintaining the intermediate element according to the transverse direction relative to the covering element during angular rotation of the steering column, so that the masking surface is then substantially stationary relative to the covering element and the sliding surface moves substantially according to the transverse direction relative to the instrument panel while remaining substantially in contact with said instrument panel.

2. Device according to claim 1, **characterised in that** it further comprises means (16, 18, 20, 22a, 22b) for guiding in translation substantially according to the longitudinal direction, which means connect the intermediate element directly to the covering element.

3. Device according to claim 2, **characterised in that** the means for guiding in translation comprise:
- two grooves (20) extending substantially according to the longitudinal direction (10),
- ribs (16) which fit inside said grooves, and
- first projections (22a) extending according to the transverse direction and second projections (22b) extending according to the lateral direction (14), each of said first and each of said second projections extending between the ribs and the grooves in order to produce punctual contact between the ribs and the grooves.

4. Device according to any one of the preceding claims, **characterised in that**:
- the second means comprise a carriage (32) which slides according to said transverse direction relative to the instrument panel,
- the first means comprise:
• a slide (34) to which the covering element (2) is fixed and which slides relative to the carriage according to the longitudinal direction, and
• means (24, 38) for connecting the carriage to the intermediate element, in translation according to the longitudinal direction, in such a manner that the carriage and the intermediate element move according to combined translational movements according to the longitudinal direction.

5. Device according to claim 4, **characterised in that** the intermediate element (4) is free relative to the carriage (32) according to the transverse direction (12).

6. Device according to claim 5, **characterised in that** it further comprises resilient means (26) acting substantially according to the transverse direction (12) in order to maintain the intermediate element (4) in contact with the covering element (22).

7. Device according to any one of claims 4 to 6, **characterised in that** the intermediate element (4) is free relative to the carriage (32) according to the lateral direction (14).

8. Device according to any one of claims 4 to 7, **characterised in that**:
- the second means further comprise a first slot (56) which extends according to the transverse direction (12) and is formed in a support (60) fixed to the instrument panel (6),
- the first means further comprise a second slot (54) which extends according to the longitudinal direction (10) and is formed in the slide (34),
- the carriage (32) defines a cover having two holes (50) supporting a rod (52) which passes through the first and second slots.

9. Device according to any one of claims 4 to 8, **characterised in that** there passes right through the slide (32), according to the longitudinal direction (10), a passage (48) of circular cross-section for receiving a steering shaft.

## Patentansprüche

1. Vorrichtung (1) zum Verdecken der Spielräume zwischen einem Armaturenbrett (6) und einem Verkleidungselement (2), das mit einer Lenksäule (8) verbunden ist, welche in Translation in einer Längsrichtung (10) und winkelig in Drehung in einer Seitenrichtung (14) im wesentlichen senkrecht zu der Längsrichtung verstellbar ist, wobei die Winkeldrehung der Lenksäule im wesentlichen eine Translationsbewegung des Verkleidungselementes bezüglich des Armaturenbrettes in einer Querrichtung (12), im wesentlichen senkrecht zu der Längsrichtung (10) und der Seitenrichtung (14) hervorruft, wobei die Vorrichtung ferner ein verhältnismäßig steifes Zwischenelement (4) beinhaltet, das eine Gleitoberfläche (5b), die im wesentlichen mit dem Armaturenbrett in Kontakt kommt, und eine Abdeckoberfläche (5a) aufweist, die im wesentlichen mit dem Verkleidungselement in Kontakt kommt, **dadurch gekennzeichnet, daß**:
- sich die Abdeckoberfläche im wesentlichen in der Längsrichtung und sich die Gleitoberfläche im wesentlichen in der Querrichtung erstrecken,
- die Vorrichtung ferner erste Mittel (24, 34, 38, 54) zum Verschieben des Verkleidungselementes im wesentlichen in der Längsrichtung bezüglich des Armaturenbrettes und zum Halten des Zwischenelementes in der Längsrichtung bezüglich des Armaturenbrettes während des Gleitens in der Längsrichtung der Lenksäule bezüglich des Armaturenbrettes derart aufweist, daß die Gleitoberfläche im wesentlichen in Kontakt mit dem Armaturenbrett bleibt und daß das Verkleidungselement bezüglich der Abdeckoberfläche gleitet, wobei es im wesentlichen mit der Abdeckoberfläche in Kontakt bleibt, und
- die Vorrichtung ferner zweite Mittel (32, 40, 44, 56) aufweist, um das Zwischenelement im wesentlichen in der Querrichtung bezüglich des Armaturenbrettes zu verschieben und das Zwischenelement entlang der Querrichtung bezüglich des Verkleidungselementes während der Winkeldrehung der Lenksäule derart zu halten, daß die Abdeckoberfläche dann im wesentlichen bezüglich des Verkleidungselementes unbeweglich ist und daß sich die Gleitoberfläche im wesentlichen in der Querrichtung bezüglich des Armaturenbrettes verschiebt, wobei es im wesentlichen in Kontakt mit dem Armaturenbrett bleibt.

2. Vorrichtung nach Anspruch 1, **dadurch gekennzeichnet, daß** sie ferner Translations-Führungsmittel (16, 18, 20, 22a, 22b) aufweist, die im wesentlichen in der Längsrichtung das Zwischenelement direkt mit dem Verkleidungselement verbinden.

3. Vorrichtung nach Anspruch 2, **dadurch gekennzeichnet, daß** die Translations-Führungsmittel aufweisen:
- zwei Rillen (20), die sich im wesentlichen in der Längsrichtung (10) erstrecken,
- Rippen (16), die sich in das Innere der Rillen einfügen, und
- erste Höcker (22a), die sich in der Querrichtung erstrecken, und zweite Höcker (22b), die sich in der Seitenrichtung (14) erstrecken, wobei sich jeder der ersten und zweiten Höcker zwischen den Rippen und den Rillen erstrecken, um einen Punktkontakt zwischen den Rippen und den Rillen zu erzeugen.

4. Vorrichtung nach einem der vorhergehenden Ansprüche, **dadurch gekennzeichnet, daß**:
- die zweiten Mittel einen Schlitten (32) aufweisen, der in der Querrichtung bezüglich des Armaturenbrettes gleitet,
- die ersten Mittel aufweisen
• einen Führungsschlitten (34), an welchem das Verkleidungselement (2) befestigt ist, der bezüglich des Schlittens in der Längsrichtung gleitet,
• Mittel (24, 38), um den Schlitten in Translation in der Längsrichtung mit dem Zwischenelement derart zu verbinden, daß sich diese letzteren in den kombinierten Translationsbewegungen in der Längsrichtung verschieben.

5. Vorrichtung nach Anspruch 4, **dadurch gekennzeichnet, daß** das Zwischenelement (4) in der Querrichtung (12) bezüglich des Schlittens (32) frei ist.

6. Vorrichtung nach Anspruch 5, **dadurch gekennzeichnet, daß** sie ferner elastische Mittel (26) aufweist, die im wesentlichen in der Querrichtung (12) wirken, um das Zwischenelement (4) mit dem Verkleidungselement (2) in Kontakt zu halten.

7. Vorrichtung nach einem der Ansprüche 4 bis 6, **dadurch gekennzeichnet, daß** das Zwischenelement (4) in der Seitenrichtung (14) bezüglich des Schlittens (32)frei ist.

8. Vorrichtung nach einem der Ansprüche 4 bis 7, **dadurch gekennzeichnet, daß**:
- die zweiten Mittel ferner einen ersten Spalt (56) aufweisen, der sich in der Querrichtung (12) erstreckt und in einer Stütze (60) ausgespart ist, die an dem Armaturenbrett (6) befestigt ist,
- die ersten Mittel ferner einen zweiten Spalt (54) aufweisen, der sich in der Längsrichtung (10) erstreckt und in dem Führungsschlitten (34) ausgespart ist,
- der Schlitten (32) eine Abdeckung bestimmt, welche zwei Löcher (50) aufweisen, die eine Stange (52) tragen, die quer durch den ersten und den zweiten Spalt geht.

9. Vorrichtung nach einem der Ansprüche 4 bis 8, **dadurch gekennzeichnet, daß** der Führungsschlitten (32) in der Längsrichtung (10) vollkommen von einem Durchgang (48) mit kreisrundem Querschnitt durchquert wird, welcher dazu bestimmt ist, eine Lenkwelle (8) aufzunehmen.
